Europäisches Patentamt

European Patent Office

Office européen des brevets

(19)

(11) Veröffentlichungsnummer: **0 274 703 B1**

(12) # EUROPÄISCHE PATENTSCHRIFT

(45) Veröffentlichungstag der Patentschrift: **22.05.91**

(51) Int. Cl.5: **G06F 3/06, G06F 5/06**

(21) Anmeldenummer: **87118763.9**

(22) Anmeldetag: **17.12.87**

(54) **Verfahren und Anordnung zum Zwischenspeichern von Daten.**

(30) Priorität: **22.12.86 DE 3644008**

(43) Veröffentlichungstag der Anmeldung:
**20.07.88 Patentblatt 88/29**

(45) Bekanntmachung des Hinweises auf die
Patenterteilung:
**22.05.91 Patentblatt 91/21**

(84) Benannte Vertragsstaaten:
**DE GB**

(56) Entgegenhaltungen:
**EP-A- 0 017 670**
**EP-A- 0 153 553**
**US-A- 4 486 854**

**PATENT ABSTRACTS OF JAPAN, Band 7, Nr.**
**130 (P-202)[1275], 7. Juni 1983; & JP- A - 58**
**48161 (FUJITSU K.K.) 22-03-1983**

**PATENT ABSTRACTS OF JAPAN, Band 6, Nr.**
**116 (P-125)[994], 29. Juni 1982; & JP - A - 57**
**45641 (NIPPON DENKI K.K.) 15.03.1982**

(73) Patentinhaber: **TANDBERG DATA A/S**
**Kjelsasveien 161 Postboks 9 Korsvoll**
**N-0808 Oslo 8(NO)**

(72) Erfinder: **Soederlund, Tom Oscar**
**Kingosgatan 1**
**N-0457 Oslo 4(NO)**

(74) Vertreter: **Goddar, Heinz J., Dr. et al**
**FORRESTER & BOEHMERT Widenmayerstras-**
**se 4/I**
**W-8000 München 22(DE)**

## Beschreibung

Die Erfindung bezieht sich auf ein Verfahren zum Zwischenspeichern von Daten gemäß dem Obergriff des Patentanspruchs 1. Ein derartiges Verfahren ist aus US-A-4 486 854 bekannt. Weiterhin bezieht sich die Erfindung auf eine Anordnung zur Durchführung des Verfahrens.

Bei einer Übertragung von Daten von einer Datenquelle zu einem asynchronen Datenspeicher ist die Verwendung eines Pufferspeichers zwischen der Datenquelle und dem Datenspeicher erforderlich. Der Datenspeicher zeichnet die Daten auf einem Speichermedium auf, das als magnetisches Speichermedium, wie Magnetband, Floppydisk oder Magnetplatte ausgebildet sein kann, oder auch als optische Platte oder Papier ausgebildet sein kann. Wenn das Speichermedium voll ist, d. h. kein Platz mehr für die Speicherung von Daten vorhanden ist, besteht die Gefahr, daß Daten, die sich noch in dem Pufferspeicher befinden, verloren gehen können. Dieses Problem nimmt mit zunehmender Größe eines Pufferspeichers zu.

Der Erfindung liegt daher die Aufgabe zugrunde, ein Verfahren und eine Anordnung anzugeben, bei deren Verwendung sichergestellt wird, daß immer alle in einem Pufferspeicher vorhandenen Daten noch auf das Speichermedium aufgezeichnet werden können. Ein derartiges System zur dynamischen Veränderung der logischen Speicherkapazität eines Pufferspeichers ist aus EP-A-0 153 553 bekannt.

Erfindungsgemäß wird die Aufgabe bei dem Verfahren der eingangs genannten Art durch die im kennzeichnenden Teil des Patentanspruchs 1 angegebenen Merkmale gelöst.

Eine vorteilhafte Anordnung zur Durchführung des Verfahrens ist im Patentanspruch 5 angegeben.

Als Datenspeicher können Drucker oder Plotter verwendet werden, die die Daten auf Papier aufzeichnen, magnetische Datenspeicher verwendet werden, die die Daten auf ein Magnetband, eine Floppydisk oder eine Magnetplatte aufzeichnen und es können auch optische Speicher verwendet werden, die die Daten auf eine optische Platte aufzeichnen.

Solange die auf dem Aufzeichnungsmedium noch verfügbare Speicherkapazität größer ist als die physikalische Speicherkapazität des Pufferspeichers, entspricht die logische Speicherkapazität der physikalischen Speicherkapazität des Pufferspeichers. Falls jedoch auf dem Speichermedium nur noch eine verfügbare Speicherkapazität vorhanden ist, die kleiner ist als die physikalische Speicherkapazität des Pufferspeichers, steht diese nicht mehr voll für die Zwischenspeicherung der Daten zur Verfügung, sondern die logische Speicherkapazität des Pufferspeichers wird entsprechend der noch verfügbaren Speicherkapazität des Speichermediums dynamisch reduziert. Auf diese Weise wird sichergestellt, daß immer alle noch im Pufferspeicher vorhandenen Daten auf das Speichermedium aufgezeichnet werden können.

Die Veränderung der logischen Speicherkapazität des Pufferspeichers kann linear oder auch stufenförmig und im einfachsten Fall auch einstufig erfolgen.

Die Durchführung des Verfahrens gemäß der Erfindung wird im folgenden anhand von Zeichnungen näher erläutert. Es zeigen

FIG 1 ein Blockschaltbild einer Übertragung von Daten zu einem Datenspeicher,

FIG 2 eine schematische Darstellung eines Magnetbands,

FIG 3 eine schematische Darstellung der logischen Speicherkapazität des Pufferspeichers,

FIG 4 eine grafische Darstellung der logischen Speicherkapazität des Pufferspeichers in Abhängigkeit von der verfügbaren Speicherkapazität des Speichermediums,

FIG 5 ein Blockschaltbild einer Anordnung zur Durchführung des Verfahrens.

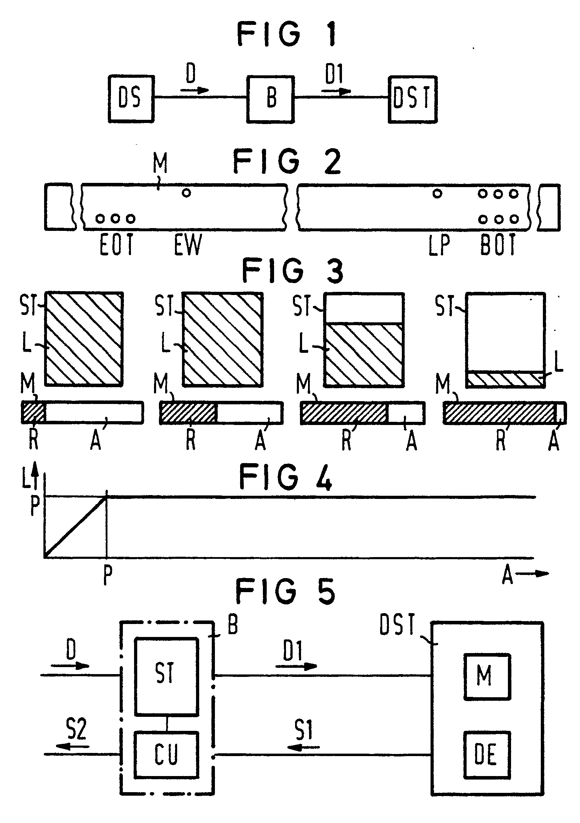

Bei der Darstellung in FIG 1 werden von einer Datenquelle DS, die ein Computer oder ein Host sein kann, in einem Speichermedium eines Datenspeichers DST zu speichernde Daten als Daten D abgegeben. Der Datenspeicher DST ist als asynchroner Speicher ausgebildet und zur Anpassung der Übertragungsgeschwindigkeit der von der Datenquelle DS abgegebenen Daten D an die Aufzeichnungsgeschwindigkeit des Datenspeichers DST werden die Daten D über einen Pufferspeicher B als Schreibdaten D1 dem Datenspeicher DST zugeführt.

Bei einer derartigen Übertragung besteht nun die Gefahr, daß dann, wenn auf dem Speichermedium die verfügbare Speicherkapazität kleiner ist als die physikalische Speicherkapazität des Pufferspeichers B, nicht mehr alle dort zwischengespeicherten Daten mehr auf das Speichermedium aufgezeichnet werden können.

Der Pufferspeicher B wird daher derart betrieben, daß er niemals mehr Daten D enthalten sollte, als auf dem Speichermedium noch aufgezeichnet werden können, da andernfalls die Gefahr besteht, daß die Daten D verloren gehen, wenn beispielsweise das Speichermedium aus dem Datenspeicher DST genommen wird oder der Pufferspeicher B keine eigene Stromversorgung aufweist, die unabhängig von der Stromversorgung des Datenspeichers DST ist oder wenn ein Übertragungsprotokoll der Datenquelle DS eine erneute Übertragung der Datent D, die nicht mehr aufgezeichnet werden konnten, nicht vorsieht.

Bei der Darstellung in FIG 2 ist als Speichermedium M ein Magnetband vorgesehen, das beispielsweise in einer Kassette enthalten ist. Das Magnetband enthält am Anfang und am Ende Löcher BOT, die den Beginn des Magnetbands kennzeichnen, ein Loch LB, das einen Ladepunkt kennzeichnet, bzw. ein Loch EW, das eine Frühwarnung darstellt und Löcher EOT, die das Ende des Magnetbands kennzeichnen. Das Magnetband wird beispielsweise in neun Spuren beschrieben und die letzte Spur wird dann mit dem Erkennen des ersten Loches EOT enden. Obwohl das Ende des Mediums als die Frühwarnung EW der letzten Spur definiert ist, ist es möglich, nach dem Erreichen dieses Punktes noch etwa 90 Datenblöcke mit jeweils 1/2 KB auf das Magnetband aufzuzeichnen. Wenn im ungünstigsten Fall alle Blöcke 15 mal aufgezeichnet werden müssen, bevor sie richtig aufgezeichnet sind, könnten nur zwei bis drei Blökke aufgezeichnet werden. Es wäre also nicht möglich, alle 90 Datenblöcke noch auf das Magnetband aufzuzeichnen. Es besteht somit die Gefahr, daß Datenblöcke verloren gehen und diese Gefahr nimmt mit zunehmender Größe des Pufferspeichers B zu. Vorhandene Magnetbandgeräte für in Kassetten untergebrachtes Magnetband weisen Pufferspeicher bis zu 16 KB auf und es besteht die Gefahr, daß bei derart großen Pufferspeichern nicht mehr alle in diesem enthaltene Daten auf das Speichermedium M aufgezeichnet werden können.

Die Darstellung in FIG 3 zeigt schematisch die logische Speicherkapazität einer in dem Pufferspeicher B vorhandenen Speichereinheit ST und die jeweils belegte Speicherkapazität R und die verfügbare Speicherkapazität A des Speichermediums M. Wenn die verfügbare Speicherkapazität des Speichermediums M größer ist als die physikalische Speicherkapazität P der Speichereinheit ST, entspricht die logische Speicherkapazität L der physikalischen Speicherkapazität P. Dies ist in den beiden linken Darstellungen der Fall. Wenn die verfügbare Speicherkapazität A kleiner ist als die physikalische Speicherkapazität P der Speichereinheit ST, wird die logische Speicherkapazität L der Speichereinheit ST entsprechend begrenzt, so daß nicht mehr die volle physikalische Speicherkapazität P zur Verfügung steht. Dies ist in den beiden rechten Darstellungen gezeigt. Auf diese Weise wird sichergestellt, daß immer der volle Inhalt der Speichereinheit ST noch auf dem Speichermedium M gespeichert werden kann.

Bei der Darstellung in FIG 4 ist dieser Zusammenhang grafisch dargestellt. In Abszissenrichtung ist die verfügbare Speicherkapazität A des Speichermediums M dargestellt und in Ordinaten richtung ist die logische Speicherkapazität L des Pufferspeichers B dargestellt. Solange die verfügbare Speicherkapazität A größer ist als die physikalische Speicherkapazität P der Speichereinheit ST ist die physikalische Speicherkapazität P auch die logische Speicherkapazität L des Pufferspeichers B. Wenn jedoch die verfügbare Speicherkapazität A des Speichermediums M kleiner wird als die physikalische Speicherkapazität P der Speichereinheit ST, wird die logische Speicherkapazität L der Speichereinheit ST entsprechend vermindert. Die Verminderung kann linear in Abhängigkeit der Speicherkapazität A erfolgen oder auch stufenförmig, beispielsweise einstufig erfolgen.

Beim Aufzeichnen von Daten D1 auf das Speichermedium M ist von der Datenquelle DS her gesehen die Speicherkapazität des Pufferspeichers B immer gleich der logischen Speicherkapazität L der Spechereinheit ST, während der Datenspeicher DST den Pufferspeicher B immer mit seiner vollen physikalischen Speicherkapazität P sieht. Eine Datenübertragung von der Datenquelle DS zu dem Pufferspeicher B ist nur dann möglich, wenn in dem Pufferspeicher B weniger Daten gespeichert sind als der jeweiligen logischen Speicherkapazität L entspricht. Somit ist sichergestellt, daß zu jeder Zeit in dem Pufferspeicher B nicht mehr Daten gespeichert sind, als auf dem Speichermedium M aufgezeichnet werden können. Wenn das Speichermedium M voll ist, ist der Pufferspeicher B leer und keine Daten gehen verloren.

Bei der in FIG 5 dargestellten Anordnung zur Durchführung des Verfahrens werden die von der Datenquelle DS abgegebenen Daten dem Pufferspeicher B zugeführt, der neben der Speichereinheit ST eine Steuereinheit CU aufweist, die das Einschreiben und das Auslesen der Daten D steuert. Pufferspeicher B, die eine konstante logische Speicherkapazität haben, sind allgemein bekannt und beispielsweise als sogenannte FIFO (First in First Out)-Speicher ausgebildet. Die Steuereinheit CU wird gegenüber einer bekannten Steuereinheit derart abgeändert, daß es auch möglich ist, die Daten D beispielsweise bei einem FIFO-Speicher an einer anderen Stelle einzuspeichern, um die logische Speicherkapazität L zu verändern.

Der Datenspeicher DST ist beispielsweise als Magnetbandgerät ausgebildet und enthält als Speichermedium M ein Magnetband. Weiterhin enthält der Datenspeicher DST einen Detektor DE, der erkennt, wenn die verfügbare Speicherkapazität A des Speichermediums M kleiner ist als die physikalische Speicherkapazität P der Speichereinheit ST. Bei einem Magnetbandgerät kann dies beispielsweise dadurch erfolgen, daß Taktimpulse gezählt werden, die von einem Antriebsmotor für das Magnetband abgegeben werden oder daß die Zeit gemessen wird, während der das Magnetband mit nomineller Geschwindigkeit in einer Richtung bewegt wird. Es ist auch möglich, beispielsweise die Ansteuerimpulse eines als Schrittmotor ausgebildeten Schrittmotors zu zählen. In jedem Fall wird die Länge des bereits beschriebenen Magnetbands gemessen und da die Gesamtlänge des Magnetbands bekannt ist, kann hieraus die noch verfügbare Speicherkapazität A ermittelt werden. Wenn diese verfügbare Speicherkapazität A kleiner ist als die physikalische Speicherkapazität P gibt der Datenspeicher DST ein Signal S1 an den Pufferspeicher B ab, so daß dieser unter Verwendung der Steuereinheit CU auf eine kleinere logische Speicherkapazität L eingestellt wird. Immer wenn die Speichereinheit ST voll ist, gibt die Speichersteuerung CU ein Signal S2 an die Datenquelle DS ab, um dieser mitzuteilen, daß der Pufferspeicher B keine weiteren Daten mehr aufnehmen kann. Auf diese Weise ist sichergestellt, daß immer alle im Pufferspeicher B zwischengespeicherten Daten noch auf das Speichermedium M aufgezeichnet werden können.

Der Pufferspeicher B kann nun eine Speichereinheit ST enthalten, deren Speicherkapazität wesentlich größer als 16 Kilobyte ist und dennoch kann sichergestellt werden, daß keine Daten im Pufferspeicher B verloren gehen.

**Ansprüche**

1. Verfahren zum Zwischenspeichern von Daten, bei dem die Daten von einer Datenquelle (DS) zu einem Datenspeicher übertragen werden und dort auf einem Speichermedium (M) gespeichert werden und bei dem eine Übertragung von der Datenquelle (DS) zu einem Pufferspeicher (B) nur dann möglich ist, wenn in dem Pufferspeicher (B) weniger Daten gespeichert sind als der jeweiligen Speicherkapazität (L) des Pufferspeichers entspricht, **dadurch gekennzeichnet,** daß die logische, die besagte Übertragung bestimmende Speicherkapazität (L) des Pufferspeichers (B) in Abhängigkeit von der verfügbaren Speicherkapazität (A) des Speichermediums (M) verändert wird, wobei die logische Speicherkapazität (L) des Pufferspeichers (B) gleich ist seiner physikalischen Speicherkapazität (P) solange die verfügbare Speicherkapazität (A) des Speichermediums (M) größer ist als diese physikalische Speicherkapazität (P) des Pufferspeichers und wobei die logische Speicherkapazität (L) des Pufferspeichers (B) dann, wenn die verfügbare Speicherkapazität (A) des Speichermediums (M) kleiner ist als die physikalische Speicherkapazität (P) dynamisch verkleinert wird, so daß immer alle in dem Pufferspeicher (B) gespeicherten Daten (D) auf dem Speichermedium (M) speicherbar sind.

2. Verfahren nach Anspruch 1, **dadurch gekennzeichnet,** daß die mögliche logische Speicherkapazität (L) des Pufferspeichers (B) stufenförmig verändert wird.

3. Verfahren nach Anspruch 1 oder Anspruch 2 **dadurch gekennzeichnet,** daß die mögliche logische Speicherkapazität (L) das Pufferspeichers (B) einstufig verändert wird.

4. Verfahren nach einem der Ansprüche 1 bis 3, **dadurch gekennzeichnet,** daß die jeweils verfügbare Speicherkapazität (A) auf dem Speichermedium (M) in dem Datenspeicher (DST) ermittelt und dem Pufferspeicher (B) mitgeteilt wird.

5. Anordnung zur Durchführung des Verfahrens nach Anspruch 1, **dadurch gekennzeichnet,** daß der Pufferspeicher (B) neben einer Speichereinheit (ST) eine Steuereinheit (CU) enthält, die die logische, die besagte Übertragung bestimmende Speicherkapazität (L) der Speichereinheit (ST) verändert und daß in dem Datenspeicher (DST) ein Detektor (DE) vorgesehen ist, der die noch verfügbare Speicherkapazität (A) des Speichermediums (M) ermittelt und der mit der Steuereinheit (CU) verbunden ist und diese ansteuert, wenn die verfügbare Speicherkapazität (A) kleiner ist als die physikalische Speicherkapazität (P) des Pufferspeichers (B), um die mögliche logische Speicherkapazität (L) zu verändern.

6. Anordnung nach Anspruch 5, **dadurch gekennzeichnet,** daß als Datenspeicher (DST) ein magnetischer Speicher, ein optischer Speicher, ein Drucker oder ein Plotter vorgesehen ist.

7. Anordnung nach Anspruch 5, bei der der Datenspeicher (DST) als Magnetbandgerät ausgebildet ist, **dadurch gekennzeichnet,** daß der Detektor (DE) die Länge des jeweils noch für eine Aufzeichnung zur Verfügung stehenden Magnetbands als Speichermedium (M) ermittelt.

**Claims**

1. Method for the intermediate storage of data, in which the data are transferred from a data source (DS) to a data store and are stored there on a storage medium (M), and in which a transfer from the data source (DS) to a buffer memory (B) is only possible when fewer data are stored in the buffer memory (B) than correspond to the respective storage capacity (L) of the buffer memory, characterised in that the logical storage capacity (L), determining the aforesaid transfer, of the buffer memory (B) is changed as a function of the available storage capacity (A) of the storage medium (M), the logical storage capacity (L) of the buffer memory (B) being equal to its physical storage capacity (P) as long as the available storage capacity (A) of the storage medium (M) is greater than this physical storage capacity (P) of the buffer memory, and the logical storage capacity (L) of the buffer memory (B) being dynamically reduced whenever the available storage capacity (A) of the storage medium (M) is smaller than the physical storage capacity (P), so that it is always possible to store all the data (D) stored in the buffer memory (B) on the storage medium (M).

2. Method according to Claim 1, characterised in that the possible logical storage capacity (L) of the buffer memory (B) is changed using steps.

3. Method according to Claim 1 or Claim 2, characterised in that the possible logical storage capacity (L) of the buffer memory (B) is changed using a single step.

4. Method according to one of Claims 1 to 3, characterised in that the respective available storage capacity (A) on the storage medium (M) is determined in the data store (DST) and is notified to the buffer memory (B).

5. Arrangement for carrying out the method according to Claim 1, characterised in that, besides a storage unit (ST), the buffer memory (B) contains a control unit (CU) which changes the logical storage capacity (L), determining the aforesaid transfer, of the storage unit (ST), and in that there is provided in the data store (DST) a detector (DE) which determines the storage capacity (A) of the storage medium (M) still available and which is connected to the control unit (CU) and activates the latter when the available storage capacity (A) is less than the physical storage capacity (P) of the buffer memory (B), in order to change the possible logical storage capacity (L).

6. Arrangement according to Claim 5, characterised in that a magnetic memory, an optical memory, a printer or a plotter is provided as data store (DST).

7. Arrangement according to Claim 5, in which the data memory (DST) is designed as a magnetic tape unit, characterised in that the detector (DE) determines the length of the magnetic tape, as storage medium (M), still available in each case for a recording.

**Revendications**

1. Procédé pour réaliser la mémorisation temporaire de données, selon lequel les données sont transmises d'une source de données (DS) à une mémoire de données et y sont mémorisées dans un milieu de mémoire (M) et selon lequel une transmission n'est possible de la source de données (DS) en direction d'une mémoire tampon (B) que lorsqu'un nombre de données, moins important que ce qui correspond à la capacité respective de mémorisation (L) de la mémoire tampon (B), sont présentes dans cette dernière, caractérisé par le fait qu'on modifie la capacité logique de mémorisation (L), qui détermine ladite transmission, de la mémoire tampon (B) en fonction de la capacité de mémorisation disponible (A) du milieu de mémoire (M), la capacité logique de mémorisation (L) de la mémoire tampon (B) étant égale à sa capacité physique de mémorisation (P), tant que la capacité de mémorisation disponible (A) du milieu de mémoire (M) est supérieure à cette capacité physique de mémorisation (P) de la mémoire tampon, tandis que la capacité logique de mémorisation (L) de la mémoire tampon (B) est réduite de façon dynamique lorsque la capacité disponible de mémorisation (A) du milieu de mémoire (M) est inférieure à la capacité physique de mémorisation (P), de sorte qu'en permanence toutes les données (D) mémorisées dans la mémoire tampon (B) peuvent être mémorisées dans le milieu de mémoire (M).

2. Procédé suivant la revendication 1, caractérisé par le fait qu'on modifie de façon échelonnée la capacité possible logique de mémorisation (L) de la mémoire tampon (B).

3. Procédé suivant les revendications 1 ou 2, caractérisé par le fait qu'on modifie selon un échelon la capacité logique possible de mémorisation (L) de la mémoire tampon (B).

4. Procédé suivant l'une des revendications 1 à 3, caractérisé par le fait qu'on détermine la capacité disponible respective de mémorisation (A) dans le milieu de mémoire (M) dans une mémoire de données (DST) et qu'on la communique à la mémoire tampon (B).

5. Dispositif pour la mise en oeuvre du procédé suivant la revendication 1, caractérisé par le fait que la mémoire tampon (B) contient, outre une unité de mémoire (ST), une unité commandable (CU), qui modifie la capacité logique de mémorisation (M), qui détermine ladite transmission, de l'unité de mémoire (ST) et que dans la mémoire de données (DST) est prévu un détecteur (DE) qui détermine la capacité encore disponible de mémorisation (A) du milieu de mémoire (M), est relié à l'unité de commande (CU) et commande cette dernière lorsque la capacité disponible de mémorisation (A) est inférieure à la capacité physique de mémorisation (P) de la mémoire tampon (B), pour modifier la capacité logique passible de mémorisation (L).

6. Dispositif suivant la revendication 5, caractérisé par le fait qu'il est prévu, comme mémoire de données (DST), une mémoire magnétique, une mémoire optique, une imprimante ou un traceur de courbes.

7. Dispositif suivant la revendication 5, dans lequel la mémoire de données (DST) est réalisée sous la forme d'un appareil à bande magnétique, caractérisé par le fait que le détecteur (DE) détermine la longueur de la bande magnétique, encore respectivement disponible pour un enregistrement, en tant que milieu de mémoire (M).

# FIG 1

DS →D→ B →D1→ DST

# FIG 2

M

EOT   EW                              LP    BOT

# FIG 3

ST
L
M
R        A

ST
L
M
R        A

ST
L
M
R        A

ST

L
M
R        A

# FIG 4

L
P

P                                        A→

# FIG 5

B                        DST

D→   ST   →D1→        M

S2←   CU   ←S1        DE